# FASCICULE DE BREVET EUROPEEN

(11) **EP 0 636 321 B1**
(45) Date de publication et mention de la délivrance du brevet: **03.11.1999**
(21) Numéro de dépôt: 94401654.2
(22) Date de dépôt: 19.07.1994
(51) Int. Cl.: A23L 1/237, A23L 1/318, A23L 1/314, A23B 4/023

(54) **Utilisation d'une composition saline pour le salage et la conservation de produits de la charcuterie**
Verwendung einer Salzzusammensetzung zum Salzen und Konservieren von Fleischprodukten
Use of a salt composition for salting and preserving meat products

(30) Priorité: 26.07.1993 FR 9309170
(43) Date de publication de la demande: 01.02.1995
(73) Titulaire: COMPAGNIE DES SALINS DU MIDI ET DES SALINES DE L'EST, Société Anonyme dite, 75008 Paris (FR)
(72) Inventeur: Deveau, Jacques, F-75005 Paris (FR); Le Guern, Lionel, F-14160 Saint-Mande (FR); Jacquet, Bernard, F-78750 Mareil Marly (FR)
(74) Mandataire: Jolly, Jean-Pierre

(56) Documents cités:
- WO-A-85/00958
- WO-A-92/16117
- AU-B- 584 659
- FR-A- 2 210 356
- GB-A- 388 513
- GB-A- 2 015 863
- GB-A- 2 172 788
- US-A- 4 224 349
- US-A- 4 789 497

## Description

La présente invention concerne l'utilisation d'une composition saline pour le salage et la conservation de produits de la charcuterie.

On sait que, pour des raisons d'ordre diététique, on tend actuellement à enrichir les aliments en sels minéraux et que, dans ce but, de nombreux produits de substitution au chlorure de sodium ont été proposés.

Il est cependant difficile de substituer d'autres ingrédients au sel (Na Cl) des denrées alimentaires, sans nuire simultanément à leur texture, à leur conservation et à leur goût.

On sait, par ailleurs, qu'une alimentation humaine équilibrée exige un apport suivi d'ions potassium et magnésium et que le corps humain présente un déficit d'ions magnésium car, à la différence du phosphore et du calcium, par exemple, le potassium et le magnésium ne sont pas fixés par les os.

La Demanderesse a donc envisagé d'incorporer dans des compositions à base de sel (chlorure de sodium), utilisées pour le salage et la conservation de produits de la charcuterie, du chlorure de magnésium, du chlorure de calcium et du chlorure de potassium.

Elle a cependant rencontré divers obstacles à cette utilisation :
- d'une part, les compositions contenant du chlorure de potassium, et surtout du chlorure de magnésium présentent une amertume qui peut altérer de façon particulièrement désagréable le goût de certains produits ;
- d'autre part, si l'on réduit trop la quantité de chlorure de sodium présente dans la composition de salage, son aptitude à la conservation des aliments est fortement diminuée ;
- enfin, il est bien connu que le chlorure de magnésium est fortement hygroscopique et c'est la raison pour laquelle il n'a pas été possible jusqu'à présent de
l'incorporer au-delà des traces présentes naturellement dans du sel de table.

GB-A-388 513 décrit l'utilisation de diverses compositions salines, notamment de mélanges de chlorure de sodium, de chlorure de potassium, de chlorure de magnésium et de chlorure de calcium, en solution aqueuse, pour le traitement de diverses substances d'origine végétale ou animale, en vue de préserver l'intégrité des cellules de ces substances. On ne mentionne cependant pas l'utilisation de ces mélanges à l'état cristallisé pour le salage et la conservation de produits de la charcuterie et, dans le seul exemple donné d'application à la charcuterie, on fait mariner un jambon dans une solution saline.

WO-A-85 00958 décrit un substitut du sel de table à faible teneur en sodium (40 à 50 % de chlorure de sodium), utilisable comme sel de cuisine ou comme condiment.

Les recherches effectuées par le Demanderesse lui ont permis d'établir que des compositions à base de sel contenant du chlorure de potassium étaient utilisables, par technologie adaptée, pour la conservation de produits de charcuterie, en donnant des produits de qualité comparable à ceux obtenus avec du chlorure de sodium seul, sans modifier de façon notable les qualités organoleptiques de ces denrées alimentaires.

Un but de la présente invention est par conséquent de proposer l'utilisation de compositions pour le salage de produits de la charcuterie, qui présentent une quantité notablement accrue de chlorure de potassium, de chlorure de magnésium et/ou de chlorure de calcium par rapport au sel naturel et, de façon concomitante, une quantité réduite de chlorure de sodium.

Un autre but de l'invention est de proposer l'utilisation de compositions de ce type qui conduisent à des produits de la charcuterie conservables sur de longues durées avec des qualités comparables à celles obtenues avec du sel naturel contenant essentiellement du chlorure de sodium.

Un but de l'invention est enfin de proposer l'utilisation de compositions de ce type avec les produits de la charcuterie sans altérer leurs qualités organoleptiques.

A cet effet, l'invention a pour objet l'utilisation pour le salage et la conservation de produits de la charcuterie d'une composition comprenant, à l'état cristallisé, du chlorure de sodium et au moins deux sels choisis parmi le chlorure de magnésium, le chlorure de calcium et le chlorure de potassium, le chlorure de sodium représentant au moins 50 % en poids de la composition, tandis que le chlorure de magnésium représente au plus 30 % en poids de cette composition et que le chlorure de calcium en représente au plus 10 % en poids, le complément à 100 % étant constitué essentiellement par du chlorure de potassium.

De préférence, la composition de salage utilisée comprendra au plus 15 % en poids de chlorure de magnésium.

Dans cette définition de l'invention, l'expression "constitué essentiellement" signifie que la majeure partie de la composition de salage, en dehors du chlorure de sodium, du chlorure de magnésium et du chlorure de calcium, est constituée de chlorure de potassium, mais qu'en dehors des composés présents naturellement à l'état de traces dans ces sels, elle peut également contenir des additifs à usage technologique usuels dans le domaine de la charcuterie.

La Demanderesse a, en effet, établi qu'il est possible d'abaisser à au moins 50% en poids la teneur en chlorure de sodium des compositions salines utilisées, tout en obtenant, par l'effet conjoint des autres chlorures également présents dans ces compositions et de technologies appropriées, une qualité de texture, un aspect et un goût des charcuteries comparables avec ceux résultant de l'emploi du seul chlorure de sodium, ceci en utilisant des quantités sensiblement égales de cette composition et de chlorure de sodium.

Par ailleurs, jusqu'à une teneur d'au plus 30% en poids de chlorure de magnésium, le goût amer inhérent au chlorure de magnésium m'affecte pas d'une manière sensible les qualités organoleptiques des denrées traitées avec cette composition de salage.

Les qualités et avantages des présentes compositions de salage se manifestent de façon marquée pour le salage et la conservation de produits de la charcuterie comme le montrent les exemples détaillés de mise en oeuvre de l'invention qui vont être décrits ci-après.

### Exemple 1

Cet exemple concerne le salage et la fabrication du boudin noir à l'aide d'une composition conforme à l'invention.

Le boudin est préparé, de façon connue en soi, à partir de masses sensiblement égales de sang de porc, de gras de porc et d'oignons.

On a utilisé dans des essais comparatifs diverses compositions de salage, utilisées à raison de 2,3% en poids du boudin sans assaisonnement (compositions 1, 2 et 3) et de 2% en poids de ce boudin (compositions 4 à 7).

La constitution des compositions testées est donnée ci-après en % en poids, avec les résultats des essais effectués par comparaison avec une composition témoin de salage à 100% de chlorure de sodium NaCl. Dans les essais, le boudin a été dégusté chaud, après avoir été grillé.

| Composition (% en poids) | Résultats |
|---|---|
| (1) 50% NaCl/50% KCl | Goût satisfaisant, mais moins salé qu'avec la composition témoin. |
| (2) 50% NaCl/50% MgCl₂ | Goût amer. |
| (3) 50% NaCl/50% CaCl₂ | Goût amer. |
| (4) 50% NaCl/50% KCl | Goût particulier à la mise en bouche, s'estompant légèrement ensuite. |
| (5) 50% NaCl/50% MgCl₂ | Goût trop salé. |
| (6) 50% NaCl/25% KCl/25% CaCl₂ | Boudin très noir à arrière-goût désagréable. |
| (7) 50% NaCl/20% KCl/20% MgCl₂/10% CaCl₂. | Excellent goût. |

La composition à 50% NaCl/20% KCl/20% MgCl₂/10% CaCl₂ se révèle donc très satisfaisante. Si on compare ses effets sur la conservation du boudin à ceux de la composition à 100% NaCl, on ne note aucune différence entre les deux compositions.

### Exemple 2

Cet exemple concerne le salage et la fabrication du pâté de campagne.

On sait que cette appellation couvre des mélanges très variés, constitués de viande maigre de porc, de gras de porc et d'abats, comprenant des quantités variables de morceaux hachés gras et de farce fine.

La formulation du pâté de campagne utilisée dans cet exemple était la suivante (% en poids) :
- foie de porc : 25%,
- gorge de porc : 40%,
- bardière : 16,5%,
- oeufs : 5%,
- eau : 4%,
- oignons : 4%,
- autres ingrédients et additifs (fécule, caséinate, composition de salage, assaisonnement) : 5%.

La composition de salage représente environ 15g/kg.

On a employé un assaisonnement spécial du commerce et utilisé les compositions suivantes de salage.

| Composition (% en poids) | Résultats |
|---|---|
| (1) 50% NaCl/10% KCl/30% MgCl₂/10% CaCl₂ avec 3g/kg d'assaisonnement | Amertume prononcée |
| (2) 50% NaCl/20% KCl/20% MgCl₂/10% CaCl₂ avec 3g/kg d'assaisonnement | Légère amertume |
| (3) 50% NaCl/10% KCl/30% MgCl₂/10% CaCl₂ avec 6g/kg d'assaisonnement | Un goût amer subsiste |
| (4) 50% NaCl/25% KCl/25% MgCl₂ avec 6g/kg d'assaisonnement | Goût satisfaisant, tant sur le plan de la saveur que de l'arôme |

Ces essais montrent qu'une teneur de 30% en poids de la composition de salage en MgCl₂ constitue pratiquement une limite pour obtenir un goût satisfaisant.

Cette composition assure une conservation du pâté en tout point comparable à celle obtenue avec du chlorure de sodium.

### Exemple 3

Cet exemple concerne le salage et la fabrication du jambon cuit.

Les essais qui vont être rapportés ci-après ont été réalisés à partir de la partie noble de l'épaule de porc.

Pour un kilogramme de viande nette (désossée, découennée, dégraissée, dénervée), on utilise : 18 g de sel ou de composition de salage ; 0,02% en poids de salpêtre (nitrate de potassium); 3 g d'eau.

Des essais ont été effectués avec les compositions de salage suivantes :

| Composition | Résultats |
|---|---|
| (1) 50% NaCl/50% KCl | Avec ces deux compositions, la couleur du jambon, son aspect et sa texture sont satisfaisants, mais le goût est fade et la composition (2) présente une légère amertume |
| (2) 50% NaCl/20% KCl/20% MgCl₂/10% CaCl₂ | |
| (3) 50% NaCl/30% KCl/10% MgCl₂/10% CaCl₂ | Cette composition donne entière satisfaction, tant sur le plan de l'aspect du jambon que de son goût. La conservation du jambon s'effectue tout-à-fait normalement |

### Exemple 4

Cet exemple concerne le salage et la conservation d'une saucisse cuite.

Les essais ont été conduits sur une saucisse cuite de type germanique à pâte fine, dite saucisse de Francfort.

On utilise comme matière première du maigre de porc (39% en poids), de la gorge (19,5%) de la bardière (14,6%) et de la glace (24,6% en poids), ce qui donne une formulation à environ 25% de lipides.

On utilise 7,5g/kg de sel nitrité et 7,5g/kg de composition de salage.

Comme autres ingrédients, on utilise des phosphates, un sel rougisseur et un arôme type.

Les essais ont été effectués avec les compositions de salage suivantes :

| Composition (% en poids) | Résultats |
|---|---|
| (1) 70% NaCl/30% KCl | Couleur rosée satisfaisante Goût fade |
| (2) 70% NaCl/30% MgCl₂ | Couleur rosée claire Goût fade et déplaisant |
| (3) 70% NaCl/30% KCl | |
| (4) 50% NaCl/10% KCl/30% MgCl₂/10% CaCl₂ | Goût amer |
| (5) 50% NaCl/20% KCl/20% MgCl₂/10% CaCl₂ | Goût très légèrement amer. Cette amertume disparaît si l'on accroît la quantité d'arôme utilisée. |

### Exemple 5

Cet exemple concerne l'utilisation de compositions de salage du saucisson sec.

Ce saucisson est constitué de 75% en poids de viande maigre et de 25% en poids de gras de bardière, avec les doses habituelles de composition de salage, de nitrate de potassium, de saccharose, de dextrose et de ferments lactiques.

On ajoute la composition de salage et les ingrédients lors du cutterage et on mélange pendant quelques minutes.

On procède à l'embossage du mélange sous un boyau collagénique spécial pour saucisson sec d'un diamètre de 47 mm.

Des essais ont été effectués avec les compositions de salage suivantes :

| Composition (% en poids) | Résultats |
|---|---|
| (1) 50% NaCl/35% KCl/15% CaCl₂ | Les tests de dégustation effectués par des experts marquent une nette préférence en faveur de la composition (2) |
| (2) 50% NaCl/30% KCl/10% CaCl₂/10% MgCl₂ | |

Il résulte des résultats des essais présentés ci-dessus que les compositions de salage, à base de NaCl, KCl, MgCl₂ et CaCl₂, utilisées pour le salage et la conservation des produits de la charcuterie, doivent comporter au moins 50% de NaCl, les pourcentages des autres constituants, KCl, MgCl₂ et CaCl₂, étant variables en fonction de la nature des produits indiqués.

## Revendications

1. Utilisation pour le salage et la conservation de produits de la charcuterie, d'une composition comprenant, à l'état cristallisé, du chlorure de sodium et au moins deux sels choisis parmi le chlorure de magnésium, le chlorure de calcium et le chlorure de potassium, le chlorure de sodium représentant au moins 50% en poids de la composition, tandis que le chlorure de magnésium représente au plus 30 % en poids de cette composition et que le chlorure de calcium en représente au plus 10% en poids, le complément à 100% étant constitué essentiellement par du chlorure de potassium.

2. Utilisation selon la revendication 1, caractérisée en ce que ladite composition de salage comprend au plus 15% en poids de chlorure de magnésium.

## Claims

1. Use, for salting and preserving prepared pork products, of a composition comprising, in the crystallised state, sodium chloride and at least two salts selected from among magnesium chloride, calcium chloride and potassium chloride, sodium chloride representing at least 50 wt.% of the composition, while magnesium chloride represents at most 30 wt.% of this composition and calcium chloride represents at most 10 wt.% thereof, the total being made up to 100 % substantially by potassium chloride.

2. Use according to claim 1, characterised in that said salting composition comprises at most 15 wt.% of magnesium chloride.

## Patentansprüche

1. Verwendung einer Zusammensetzung zum Salzen und Konservieren von Fleischprodukten, welche im kristallisierten Zustand Natriumchlorid und mindestens zwei Salze enthält, welche aus der Gruppe Magnesiumchlorid, Kalziumchlorid und Kaliumchlorid gewählt sind, wobei der Anteil des Natriumchlorids mindestens 50 Gew. %, bezogen auf das Gewicht der Zusammensetzung, beträgt, wohingegen der Anteil an Magnesiumchlorid höchstens 30 Gew. %, bezogen auf das Gewicht dieser Zusammensetzung, beträgt, und bei welcher der Anteil an Kalziumchlorid höchstens 10 Gew. % beträgt, wobei der auf 100 % ergänzende Anteil im wesentlichen aus Kaliumchlorid besteht.

2. Verwendung nach Anspruch 1, dadurch gekennzeichnet, daß die Zusammensetzung zum Salzen höchstens 15 Gew. % Magnesiumchlorid enthält.
